# EUROPÄISCHE PATENTANMELDUNG

(11) **EP 0 716 987 A2**
(43) Veröffentlichungstag der Anmeldung: **19.06.1996**
(21) Anmeldenummer: 95119336.6
(22) Anmeldetag: 07.12.1995
(51) Int. Cl.: B65D 85/672

(54) **Verpackungssystem zur Aufnahme einer auf eine Wickelhülse in Rollenform aufgewickelten Folienbahn**

(30) Priorität: 15.12.1994 DE 4444749; 09.10.1995 DE 19537547
(71) Anmelder: HOECHST AKTIENGESELLSCHAFT, D-65926 Frankfurt am Main (DE)
(72) Erfinder: Dinter, Peter, Dipl.-Ing., D-65375 Hallgarten (DE); Gleffe, Klaus-Jürgen, Dipl.-Ing., D-65232 Taunusstein-Wehen (DE)

(57) **Zusammenfassung**

Die Erfindung betrifft ein Verpackungssystem für einen Folienwickel 1 aus einer hochempfindlichen Folienbahn. Das System setzt sich aus zwei quadratischen oder rechteckigen Stirnwänden 5, 5 mit zentral angeordneten zylindrischen Aufsteck- oder Zentrierzapfen 6 zur Aufnahme der den Folienwickel tragenden Wickelhülse 2 sowie zwei mit den Stirnwänden über Spannelemente 7 lösbar, aber gleichzeitig dichtend verbundenen, konzentrisch ineinandergefügten Rohren, einer inneren Wickelhülse 2 und einer äußeren Schutzhülse 3 zusammen und bildet somit eine geschlossene Verpackung um den Folienwickel herum.

## Beschreibung

Die Erfindung betrifft ein Verpackungssystem zur Aufnahme einer auf eine Wickelhülse in Rollenform aufgewickelten Folienbahn, umfassend zwei quadratische oder rechteckige, auf Abstand sich gegenüberliegende Stirnwände mit zentralen Aufsteckzapfen, die paßgenau in die Wickelhülse eingeschoben sind, deren Länge den Abstand zwischen den beiden Stirnwänden vorgibt, die durch Spannelemente mit der Wickelhülse zusammengehalten sind.

Folien aus unterschiedlichsten Polymerwerkstoffen stellen heute für eine Vielzahl von Branchen kaum noch wegzudenkende Werkstoffe dar. Zu diesen Branchen zahlt auch die Elektroindustrie, in der Folien u.a. in metallisierter Form zur Herstellung von Wickelkondensatoren Verwendung finden. Mit der permanenten Miniaturisierung der elektronischen Bauelemente geht eine zwangsläufige Reduzierung der Foliendicken einher, die die Folienhersteller dazu zwingt, praktisch an die Grenze des technisch Machbaren zu gehen. So stehen aktuell biaxial gestreckte Ultradünnstfolien aus PET im Dickenbereich von nur 0,5 bis 2 µm am Markt zur Verfügung. Daß derartig dünne Folien außerordentlich schwierig bei nachfolgenden Weiterverarbeitungsschritten zu handhaben sind, liegt auf der Hand.

Insbesondere trifft diese Schwierigkeit auf den im Hochvakuum ablaufenden, für die Folie extreme thermische und mechanische Belastungen mit sich bringenden Metallbedampfungsprozeß zu. Hier beeinträchtigen zwei unmittelbar mit der Folie in den Vakuumrezipienten "eingeschleppte" Störgrößen, nämlich sowohl die zwischen die einzelnen Folienlagen beim Konfektionieren der Bahn eingeschlossene, mehr oder minder Feuchtigkeit enthaltende Luft, als auch die vom Folienpolymer selbst aufgenommene Luftfeuchtigkeit, nicht nur den Prozeßablauf, sondern auch die Produktqualität in nicht tolerierbarem Maße. Verbesserungen müssen deshalb darauf gerichtet sein, dem Verarbeiter möglichst luft- und feuchtigkeitsfreie Folienrollen zur Verfügung zu stellen. Alle Herstellungsmaßnahmen zur Ausschaltung dieser Störgrößen sind nutzlos, sofern es nicht gelingt, das Ergebnis mit Hilfe eines geeigneten Verpackungssystems für den Vertriebsweg zum Kunden sicherzustellen.

Aus der DE-A 40 38 011 ist eine Verpackung für einen Folienwickel bekannt, mit einem Wickelkern und zwei Endstücken, die jeweils mit ihren zentralen Ausstülpungen in den hohlen Wickelkern eingeschoben sind, auf dem eine Folienbahn zu einem Folienwickel aufgewickelt ist. Den Folienwickel umhüllt ein mit den Endstücken verbundener gespannter Folienschlauch, der an den Enden in umlaufende Nuten der Endstücke eingeschrumpft ist und so einen Formschluß zu diesen hält. Zwischen den Stirnflächen des Folienwickels und den gegenüberliegenden Flächen der Endstücke sind Scheiben aus elastischem Material angeordnet, die die Stirnflächen bzw. die Schnittkanten der Folienbahn abdichten und dadurch den Austritt von lichtempfindlichem Photopolymergemisch, das z.B. die Folienbahn beschichtet, durch kalten Fluß verhindern und es nicht dazu kommt, daß das Photopolymergemisch die einzelnen Lagen des Folienwickels miteinander verklebt. Die Scheiben werden durch die Spannung des Folienschlauches an die Stirnseiten des Folienwickels angepreßt und schmiegen sich elastisch an. Um diese Anordnung ist eine Hülse aus einem rechteckigen Rohling aus Karton gelegt, der entsprechend geknickt ist und mit einem längslaufenden Klebeband geschlossen und an den Endstücken befestigt ist. Der Folienschlauch dient als Spannelement, das nicht über ein Dichtelement an den Endstücken anliegt. Der Wickelkern ist länger als der Folienschlauch, und seine Stirnkanten sind nicht mit Dichtelementen gegen die Endstücke abgedichtet. Mit den z.Zt. von den Folienherstellern verwendeten Verpackungen, die z.B. durch die Patentschriften DE 38 08 064 und US 3,352,410 beschrieben sind, kann das Einschleppen der Störgrößen nicht verhindert werden. Hierfür stellen eher die auf dem Markt erhältlichen und vor allem in Form von Beuteln, Säcken, Schläuchen, Standbeuteln, tiefgezogenen Behältnissen etc. zum hygienischen, aromaschützenden und haltbarkeitsverlängernden Abpacken von Lebensmitteln zum Einsatz gelangenden Folienverpackungen technisch durchaus praktikable, ökologisch jedoch nicht immer vertretbare Lösungen dar.

Es stellt sich somit die Aufgabe, eine für Transport und Lagerung hochempfindlicher Kunststoffolien in Rollenform geeignete Verpackung zu schaffen, die einerseits langfristig die gewünschte Schutzfunktion, d.h. hermetische Abkapselung der Folienrolle gegenüber schädlichen Umwelteinflüssen, gewährleistet und zudem als Mehrwegsystem sowohl ökologischen als auch ökonomischen Anforderungen gerecht wird.

Diese Aufgabe wird erfindungsgemäß durch ein Verpackungssystem der eingangs beschriebenen Art so gelöst, daß eine eigenstabile Schutzhülse einen Folienwickel auf der Wickelhülse umschließt, daß die Schutzhülse gleich lang wie die Wickelhülse ist und beide Hülsen über die Stirnseiten des Folienwickels vorstehen und daß Dichtelemente aus elastischem Material zwischen Stirnkanten der Schutz- und der Wickelhülse und den sich gegenüberliegenden Innenseiten der Stirnwände angeordnet sind.

In einer Ausgestaltung der Erfindung sind die elastischen Dichtelemente ringförmig, und ihre Breiten entsprechen gleich den Wanddicken der Schutz- und der Wickelhülse.

In einer anderen Ausgestaltung der Erfindung weist eine Dichtung quadratische, rechteckige oder kreisrunde Form auf, wobei die Außenabmessungen der Dichtung zumindest gleich dem Außenmaß der Schutzhülse sind und eine zentrale Öffnung der Dichtung einen Durchmesser hat, der zumindest gleich dem Außendurchmesser des Aufsteckzapfens der Stirnwand ist.

In Weitergestaltung der Erfindung sind die Außenabmessungen der Dichtung bis zu 20 mm großer als das Außenmaß der Schutzhülse.

Weitere Merkmale der Erfindung ergeben sich aus den Ansprüchen 5 bis 13.

Nachstehend wird das erfindungsgemäße Verpackungssystem anhand von zeichnerisch dargestellten Ausführungsformen näher erläutert. Es zeigen:
- Figur 1: in einem Teilschnitt den Aufbau des erfindungsgemäßen Verpackungssystems,
- Figur 2: eine perspektivische Darstellung der Vorderseite der für das Verpackungssystem verwendeten Stirnwand,
- Figur 3: eine perspektivische Ansicht der Rückseite der Stirnwand,
- Figuren 4 und 5: schematische Darstellungen zweier Ausführungsformen des Verpackungssystems mit verschiedenen Dichtungen zwischen der Stirnwand und den Stirnkanten der Wickelhülse und der äußeren Schutzhülse, und
- Figur 6: ein Spannelement zum dichten Verschließen des Verpackungssystems.

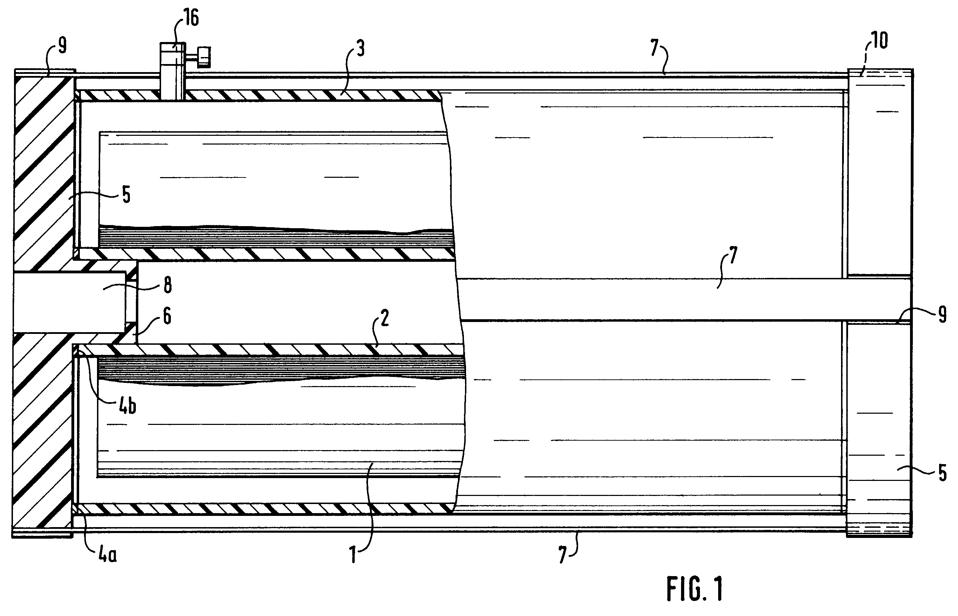

In Figur 1 ist in einem schematischen Teilschnitt ein versandfertig verpackter, konfektionierter Folienwickel 1 dargestellt, der auf eine zylindrische Wickelhülse 2 aus Kunststoff aufgewickelt ist. Eine den Folienwickel 1 umgebende Schutzhülse 3 aus Kunststoff, bevorzugt als Zylinder geformt, bildet den äußeren Schutzmantel der Verpackung. Die Schutzhülse 3 kann auch prismatische Form, mit rechteckigem oder quadratischen Querschnitt, haben. Elastische Dichtungen 4a, 4b, zwischen Stirnwänden 5, 5 und Schutzhülse 3 sowie der Wickelhülse 2 angebracht, dichten den Folienwickel 1 ab. Die Stirnwände 5,5 weisen quadratische oder rechteckige Form auf und besitzen in ihrem Zentrum einen in seinem äußeren Durchmesser mit dem Innendurchmesser der Wickelhülse 2 korrespondierenden Aufsteckzapfen 6, auf dem die Wickelhülse 2 zentriert ist. In axialer Richtung zusammengehalten und dichtend verpreßt werden die Stirnwände 5 mit der Wickelhülse 2 und der Schutzhülse 3 durch Spannelemente 7, wobei es sich im einfachsten Falle um Umreifungsbänder aus Stahl oder Kunststoff handelt, wie sie in der Verpackungsbranche zur Ladungssicherung zum Einsatz gelangen. Hierbei kann die Positionierung der Spannbänder 7 beliebig gewählt werden, entweder durch die hohle Wickelhülse 2, die Zentrumbsbohrung 8 des Aufsteckzapfens 6 der Stirnwände 5, 5 hindurch und über deren Stirnkanten 10 oder als Außenbänderung auschließlich über die Stirnkanten 10 der Stirnwände 5, 5. Die in den Stirnkanten 10 ausgesparten Führungsnuten 9 verhindern dabei ein Verrutschen der Spannbänder 7 und damit ein eventuelles Undichtwerden der Verpackung.

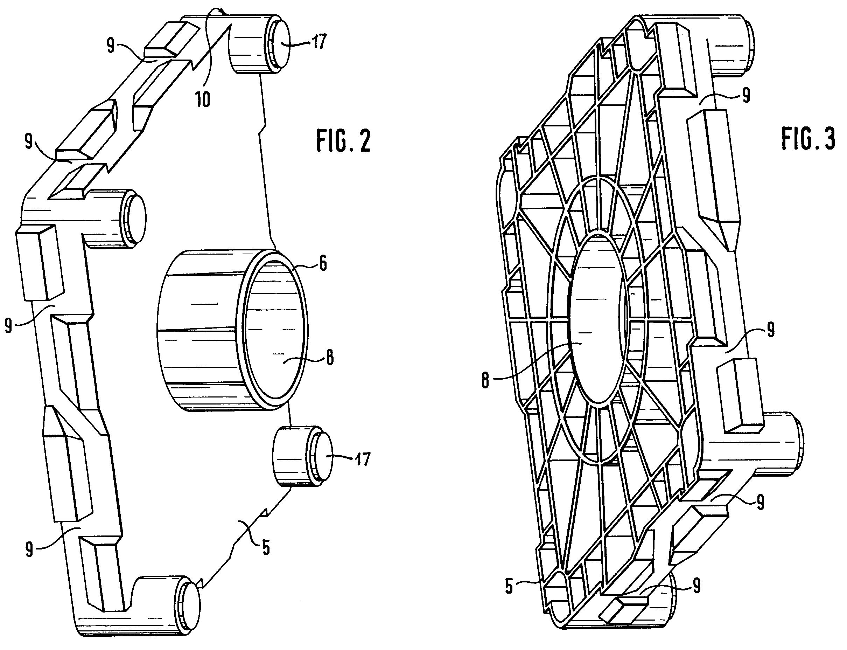

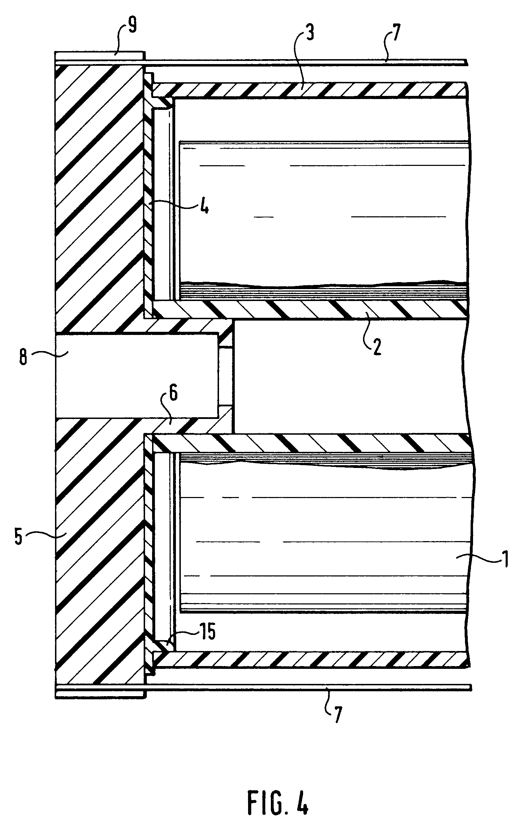

Hinsichtlich der Ausführung der in den beiden Figuren 2 und 3 gezeigten Kunststoff-Stirnwand 5 wird auf deren detaillierte Beschreibung in der deutschen Patentschrift 38 08 064 (= US-Patent 4,884,690) verwiesen.

In Figur 4 ist eine Variante der Abdichtung zwischen der glatten Vorderseite der Stirnwand 5 und den Stirnkanten der Wickelhülse 2 bzw. der Schutzhülse 3 gezeigt. Hierbei besteht eine Dichtung 4 aus einem Stück Elastomermaterial in quadratischer oder kreisrunder Form, wobei die Außenabmessungen der Dichtung 4 mindestens dem Außendurchmesser der Schutzhülse 3 entsprechen, jedoch bevorzugt 20 mm größer sind, während der Durchmesser einer zentralen Öffnung der Dichtung 4 mit dem Außendurchmesser des Aufsteckzapfens 6 übereinstimmen muß. Im Hinblick auf eine einfachere konzentrische Positionierung der Schutzhülse 3 kann die Dichtung 4 dahingehend modifiziert sein, daß sie wahlweise eine in der Zeichnung dargestellte kreisförmige Sicke 15 (erhabener Wulst) oder eine nicht gezeigte kreisringförmige Nut aufweist, die mit der Schutzhülse 3 in Eingriff gelangt und die exakte Positionierung der Schutzhülse 3 dadurch erleichtert.

Als eine weitere Maßnahme, die Schutzhülse 3 absolut sicher in ihrer konzentrischen Position zum Folienwickel 1 zu fixieren, bietet sich die Verwendung von entsprechend dimensionierten Distanzbüchsen an, die auf die an den Ecken der Vorderseite der Stirnwand angeordneten, zylindrischen Nockenansätze 17 gesteckt werden und gegen die die Schutzhülse 3 anliegt. Ebenso können als Zentrierhilfen für die Schutzhülse 3 Scheiben oder Kreuzelemente verwendet werden, die auf die Wickelhülse 2 aufgesteckt werden.

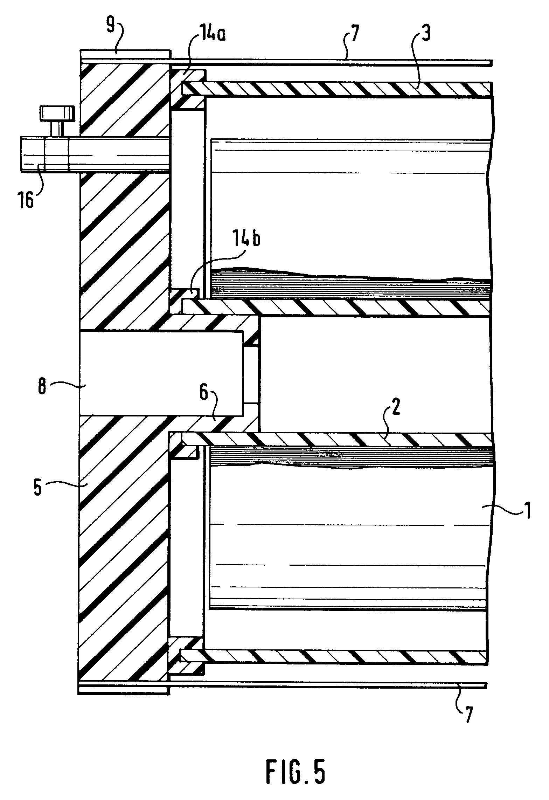

Wie in Figur 5 dargestellt ist, sind hier für die Wickelhülse 2 und die Schutzhülse 3 separate, auf deren jeweiligen Durchmesser abgestimmte Dichtelemente 14a bzw. 14b eingesetzt, die zwecks rutschsicherer Fixierung entweder als U-Profil 4a oder Winkelprofil 4b ausgebildet sind. Die hier dargestellten Dichtelemente stellen selbstverständlich nur eine kleine Auswahl der technischen Möglichkeiten dar und schließen weitere Konstruktionsvarianten nicht aus.

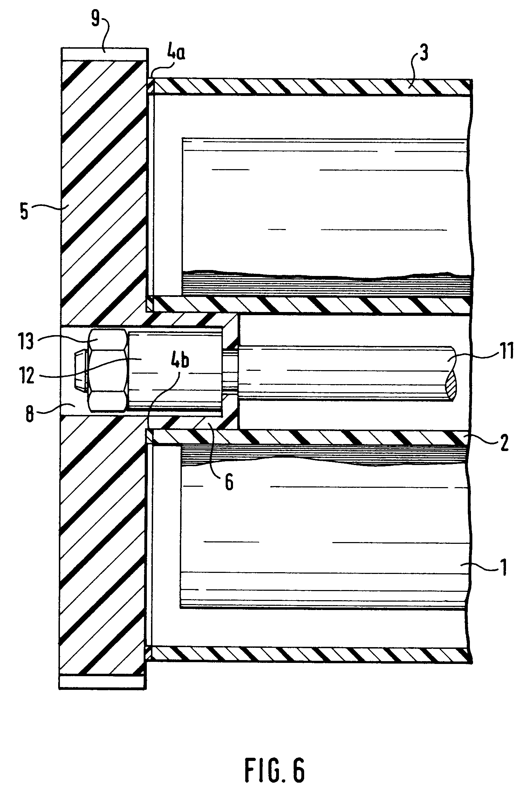

In Figur 6 erfolgt die Ladungssicherung anstelle von Spannelementen 7 durch einen Gewindestab 11 mit dazugehöriger Distanzbüchse 12 und Gewindemutter 13. Diese Konstruktion berücksichtigt, da die Spannelemente komplett in der Zentrumsbohrung 8 der Stirnwand und der Wickelhülse 2 angeordnet sind, das bündige Stapeln der Verpackung auf Transportpaletten. Ein Vorteil dieser Spannelemente gegenüber den Spannbändern 7 ist darin zu sehen, daß sie, wie der Rest der erfindungsgemäßen Verpackung, wiederverwendbar sind. Die Abdichtung des Folienwickels 1 erfolgt ähnlich wie bei der Ausführungsform nach Fig. 1 durch elastische Dichtungen 4a und 4b zwischen den Stirnwänden 5, 5 und der Schutzhülse 3 sowie der Wickelhülse 2.

Die vorbeschriebene erfindungsgemäße Verpackung, kombiniert aus leichten Kunststoffelementen mit hoher mechanischer Festigkeit, bietet neben einem optimalen Transportschutz für Rollen aus hochwertigen Folien zudem auch noch die Möglichkeit, die äußeren Lagerbedingungen für den Folienwickel den Erfordernissen anzupassen und langfristig auch zu gewährleisten. Werden hierzu die äußere Schutzhülse 3 oder auch die Stirnwände 5, 5 mit entsprechenden Anschlußarmaturen 16 ausgerüstet (vgl. Figuren 1 und 5), lassen sich im Innenraum der Verpackung von den äußeren Lagerkonditionen abweichende Bedingungen, wie z.B. Überdruck, Unterdruck, Luftfeuchtigkeitsgehalt, Schutzgasatmosphäre etc., einstellen. Ist die äußere Schutzhülse 3 aus transparenten Kunststoffen, wie z.B. PVC, Polycarbonat, PMMA oder dergleichen gefertigt, so können im Innenraum der Verpackung angebrachte Indikatoren visuell kontrolliert werden, deren Veränderungen Aussagen über den in der Verpackung herrschenden aktuellen Zustand liefern.

Mit der Erfindung werden die nachfolgend aufgelisteten Vorteile erzielt:
- Schutz des eingepackten Folienwickels gegenüber mechanischen Beschädigungen und schädlichen Umwelteinflüssen,
- Einstellung gezielter Lagerbedingungen möglich,
- geringes Verpackungsgewicht durch Verwendung hochfester und gleichzeitig leichter Kunststoffelemente,
- niedrige Verpackungskosten durch Einsatz preisgünstiger Elemente und Wiederverwertbarkeit der Verpackung als Mehrwegsystem,
- konstruktiv einfache Elemente aus sortenreinen, recyclierfähigen Werkstoffen,
- keine Entsorgungskosten,
- als Mehrwegsystem werden die ökologischen Forderungen der Verpackungsverordnung voll erfüllt.

## Patentansprüche

1. Verpackungssystem zur Aufnahme einer auf eine Wickelhülse in Rollenform aufgewickelten Folienbahn, umfassend zwei quadratische oder rechteckige, auf Abstand sich gegenüberliegende Stirnwände mit zentralen Aufsteckzapfen, die paßgenau in die Wickelhülse eingeschoben sind, deren Länge den Abstand zwischen den beiden Stirnwänden vorgibt, die durch Spannelemente mit der Wickelhülse zusammengehalten sind, dadurch gekennzeichnet, daß eine eigenstabile Schutzhülse (3) einen Folienwickel (1) auf der Wickelhülse (2) umschließt, daß die Schutzhülse (3) gleich lang wie die Wickelhülse (2) ist und beide Hülsen (3, 7) über die Stirnseiten des Folienwickels (1) vorstehen und daß Dichtelemente (4a, 4b; 4; 14a, 14b) aus elastischem Material zwischen Stirnkanten der Schutz- und der Wickelhülse und den sich gegenüberliegenden Innenseiten der Stirnwände (5, 5) angeordnet sind.

2. Verpackungssystem nach Anspruch 1, dadurch gekennzeichnet, daß die elastischen Dichtelemente (4a, 4b) ringförmig sind und ihre Breiten gleich den Wanddicken der Schutz(3) - und der Wickelhülse (2) entsprechen.

3. Verpackungssystem nach Anspruch 1, dadurch gekennzeichnet, daß eine Dichtung (4) aus Elastomermaterial quadratische, rechteckige oder kreisrunde Form aufweist, wobei die Außenabmessungen der Dichtung (4) zumindest gleich dem Außenmaß der Schutzhülse (3) sind und daß eine zentrale Öffnung der Dichtung (4) einen Durchmesser hat, der zumindest gleich dem Außendurchmesser des Aufsteckzapfens (6) der Stirnwand (5) ist.

4. Verpackungssystem nach Anspruch 3, dadurch gekennzeichnet, daß die Außenabmessungen der Dichtung (4) bis zu 20 mm größer als das Außenmaß der Schutzhülse (3) sind.

5. Verpackungssystem nach Anspruch 1, dadurch gekennzeichnet, daß die Dichtelemente (14a) für die Stirnkanten der Schutzhülse (3) U-förmiges Profil haben und in ihren Abmessungen auf die Wanddicke der Schutzhülse (3) abgestimmt sind.

6. Verpackungssystem nach Anspruch 1, dadurch gekennzeichnet, daß die Dichtelemente (14b) für die Stirnkanten der Wickelhülse (2) Winkelprofil aufweisen, wobei ein Schenkel am Außenumfang der Wickelhülse (2) anliegt und der andere Schenkel sich zwischen der Stirnkante der Wickelhülse und der Innenseite der Stirnwand befindet.

7. Verpackungssystem nach Anspruch 3, dadurch gekennzeichnet, daß die Dichtung (4) eine Sicke (15) oder eine Nut zum Positionieren der Schutzhülse (3) aufweist.

8. Verpackungssystem nach jedem der Ansprüche 1 bis 7, dadurch gekennzeichnet, daß die Wickelhülse (2), die Schutzhülse (3) und die Stirnwände (5, 5) aus Kunststoff bestehen.

9. Verpackungssystem nach jedem der Ansprüche 1 bis 7, dadurch gekennzeichnet, daß die Wickel (2)-, Schutzhülse (3) und die Stirnwände aus Verbundwerkstoff, Metall oder Holz bestehen.

10. Verpackungssystem nach Anspruch 1, dadurch gekennzeichnet, daß die Schutzhülse (3) zylindrische oder prismatische Form mit rechteckigem oder quadratischem Querschnitt besitzt.

11. Verpackungssystem nach Anspruch 1, dadurch gekennzeichnet, daß die Spannelemente (7) Umreifungsbänder sind, die außerhalb der Schutzhülse (3) in Nuten (9) über Stirnkanten (10) der Stirnwände geführt sind.

12. Verpackungssystem nach Anspruch 1, dadurch gekennzeichnet, daß die Spannelemente einen Gewindestab (11) mit zugehöriger Distanzbüchse (12) und Gewindemutter (13) umfassen, und daß der Gewindestab (11) sich durch die hohle Wickelhülse (2) und die Distanzbüchse (12) in der Zentrumsbohrung (8) des Aufsteckzapfens (6) hindurch erstreckt und mit der Gewindemutter (13) verschraubt ist.

13. Verpackungssystem nach Anspruch 1, dadurch gekennzeichnet, daß eine Anschlußarmatur (16) in der Schutzhülse (3) oder in einer der beiden Stirnwände (5) angebracht ist.
